# EUROPÄISCHE PATENTANMELDUNG

(11) **EP 0 651 237 A1**
(43) Veröffentlichungstag der Anmeldung: **03.05.1995**
(21) Anmeldenummer: 94115848.7
(22) Anmeldetag: 07.10.1994
(51) Int. Cl.: G01K 15/00

(54) **Verfahren zur Temperaturbestimmung eines Objekts**

(30) Priorität: 02.11.1993 DE 4337272
(71) Anmelder: Bayerische Motoren Werke Aktiengesellschaft, 80809 München (DE)
(72) Erfinder: Bachhelm, Edwin, D-80935 München (DE); Krauss, Michael, D-81369 München (DE)

(57) **Zusammenfassung**

Bei einem Verfahren zur Temperaturbestimmung eines Objekts mit einem Temperaturfühler, insbesondere bei Kraftfahrzeugen ist ein weiterer Temperaturfühler demselben oder einem anderen Objekt zugeordnet. Das Ausgangssignal des weiteren Temperaturfühlers wird berücksichtigt, wenn die zu erwartenden Temperaturen für beide Temperaturfühler zumindest annähernd gleich sind und daß die tatsächliche Temperatur des Objekts bzw. beider Objekte durch Mittelwertbildung aus den von beiden Sensoren bestimmten Temperaturen abgeleitet wird.

## Beschreibung

Die Erfindung bezieht sich auf ein Verfahren nach dem Oberbegriff des Patentanspruchs 1.

Innerhalb eines Systems mit Verschiedenen Objekten werden punktuell Temperaturen der Objekte bestimmt. Auch kann die Temperatur eines Objekts durch mehrere Temperaturfühler bestimmt werden. Beispielsweise wird bei einem Kraftfahrzeug eine Vielzahl von Temperaturen gemessen Bei den Objekten handelt es sich beispielsweise um die verschiedenen Medien wie Ansaugluft, Abgastemperatur vor und nach dem Durchlaufen eines Katalysators, die Kühlwassertemperatur oder auch die Temperatur an definierten Stellen der Brennkraftmaschine. Jeder dieser Temperaturfühler besitzt eine meist bauartbedingte Toleranz, die das Ergebnis einer dem Temperaturfühler zugeordneten elektronischen Auswerte- und Verarbeitungseinheit beeinflußt. So geht beispielsweise die Abweichung eines Temperaturfühlers für das Kühlwasser in das Signal für die Einspritzmenge bzw. den Zündzeitpunkt der Brennkraftmaschine des Kraftfahrzeugs ein.

Da die Temperaturfühler häufig auch einen großen Temperaturbereich abdecken, beispielsweise erreicht die Abgastemperatur Werte um die 1000 °C, hängt die Fehlertoleranz auch von der jeweils vorliegenden tatsächlichen Temperatur ab und ist meist mit steigender Temperatur zunehmend. Gerade bei einem großen Temperaturbereich zeigt sich, daß die Fehlertoleranz absolut auch erheblich ist mit der Folge entsprechender Unsicherheiten und Toleranzen des davon abhängigen Signals. Im Zuge verschärfter Abgasbestimmungen ergibt sich damit aber ein zunehmendes Problem.

Zur Einhaltung der Abgasbestimmungen könnten verschiedene Wege eingeschlagen werden, die jedoch im Ergebnis unbefriedigend sind. So könnte beispielsweise ein Zusätzlicher Regelungsaufwand betrieben werden, um das von der Auswerte und Verarbeitungseinheit gelieferte Signal so zu verbessern, daß die Vorgaben für das Immissionsverhalten eingehalten werden. Ein anderer Weg wäre, die Temperaturfühler selbst möglichst toleranzfrei zu machen. Dies aber ist mit erheblichen Kosten verbunden. Erfahrungsgemäß steigen die Kosten für Temperaturfühler mit sinkender Fehlertoleranz unverhältnismäßig hoch an.

Der Erfindung liegt die Aufgabe zugrunde, ein Verfahren der eingangs genannten Art zu schaffen, das mit geringem Aufwand eine hohe Genauigkeit für die Temperaturbestimmung eines Objekt liefert.

Die Erfindung löst diese Aufgabe durch die kennzeichnenden Merkmale des Patentanspruchs 1.

Die Erfindung setzt zum einen voraus, daß die mit beiden Temperaturfühler bestimmten Temperaturen zumindest annähernd gleich sind. Dies ist dann der Fall, wenn das Objekt über einen längeren Zeitraum hinweg ohne gesonderte Temperaturbeaufschlagung ist und das thermische Gleichgewicht mit der Umgebung vorliegt. Ein Beispiel hierfür ist eine mehrstündige Ruhezeit eines Kraftfahrzeugs, während der die Komponenten des Kraftfahrzeugs zumindest annähernd auf Umgebungstemperatur kommen. Ist dies der Fall, so sind fehlertoleranzfreie Temperaturfühler vorausgesetzt, die von beiden Temperaturfühlern gemessenen Temperaturen auch dann gleich, wenn die beiden Temperaturfühler unterschiedlichen Objekten zugeordnet sind. Die Temperatur im Ansaugtrakt der Brennkraftmaschine ist gleich der des Kühlwassers bzw. der im Abgastrakt, sofern eine entsprechend lange, beispielsweise mehrstündige Betriebspause der Brennkraftmaschine vorhergeht.

Als weiterer Schritt wird bei der Erfindung eine Mittelwertbildung vorgenommen. Es kann sich dabei um die Bildung des arithmetischen oder auch des geometrischen Modells der von den Temperaturfühlern gelieferten Temperaturen handeln.

Als weiterer Verfahrensschritt wird das Ausgangssignal der beiden Temperaturfühler korrigiert. Den Ausgangssignalen beider Temperaturfühler wird die gemittelte Temperatur zugeordnet.

Gegenüber den genannten Formen der Mittelwertbildung ergibt sich eine Verbesserung der Erfindung, wenn der Mittelwertbildung entsprechend der Fehlertoleranz der Temperaturfühler erfolgt. Es sei ein Temperaturfühler mit kleiner Fehlertoleranz und ein Temperaturfühler mit großer Fehlertoleranz angenommen. Durch die Berücksichtigung der Fehlertoleranzen der beiden Temperaturfühler wird das Ausgangssignal des Temperaturfühlers mit geringer Fehlertoleranz stärker als das des Temperaturfühlers mit großer Fehlertoleranz gewichtet. Es wird somit das gewichtete (auch gewogene genannte) arithmetische Mittel der beiden Temperaturen bestimmt. Der Wichtungsfaktor ist umso größer, je kleiner die Fehlertoleranz des jeweiligen Temperaturfühlers ist. Damit wird einerseits die große Fehlertoleranz des einen Temperaturfühlers deutlich eingeschränkt. Andererseits macht sich die Fehlertoleranz dieses Temperaturfühlers für das Ausgangssignal des Temperaturfühlers mit kleiner Fehlertoleranz nicht wesentlich bemerkbar.

Wie bereits eingangs ausgeführt, hängt die Fehlertoleranz mitunter auch von der jeweils vorliegenden Temperatur ab. Entsprechend sieht eine weitere Verbesserung der Erfindung vor, die Mittelwertbildung abhängig von der gemessenen Temperatur vorzunehmen. Damit wird auch die temperaturabhängige Änderung der Fehlertoleranz der Temperaturfühler berücksichtigt und beispielsweise im Falle der Bildung des gewichteten Mittels der Wichtungsfaktor temperaturabhängig angenommen.

Schließlich kann auch mit Hilfe eines Rechners die Fehlerkorrektur der Temperaturfühler vorgenommen werden. Mit Hilfe von Fehlertoleranzen, die aus einer Tabelle entnommen werden, wird mit Hilfe des Rechners der Abgleich der von beiden Temperaturfühlern gemessenen Temperaturen vorgenommen.

Anhand eines Diagramms ist die Erfindung weiter erläutert.

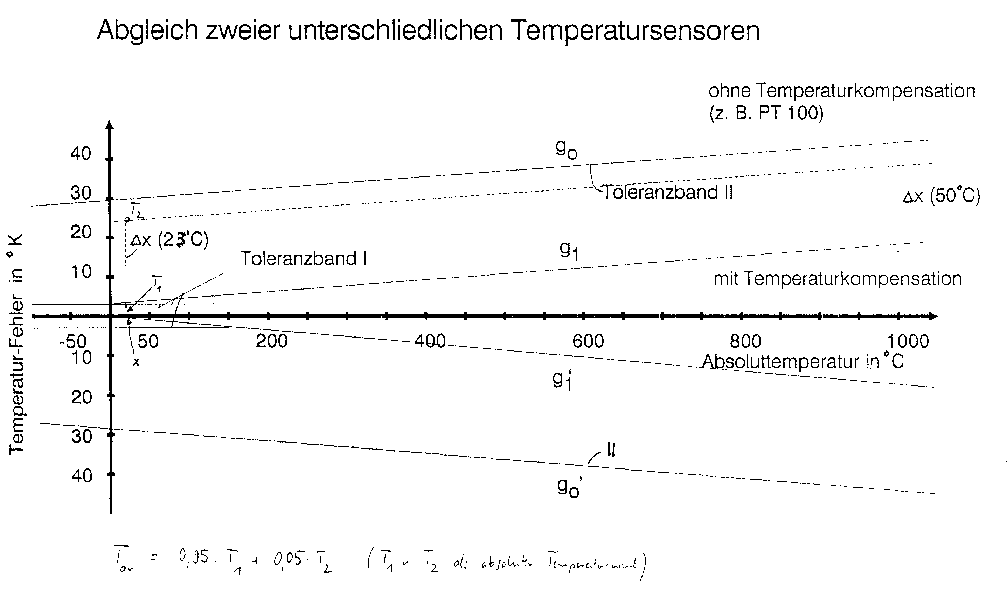

Das in der Zeichnung dargestellte Diagramm zeigt die temperaturabhängige Fehlertoleranz zweier nicht im einzelnen dargestellten Temperaturfühler eines Kraftfahrzeugs. Der erste Temperaturfühler dient dazu, die Kühlwassertemperatur einer Brennkraftmaschine zu bestimmen. Er deckt einen Temperaturbereich von etwa -30°C bis 150°C ab. Seine Fehlertoleranz beträgt über den gesamten Meßbereich einheitlich +/- 2,5 K. Dieser Temperaturbereich einschließlich des Fehlertoleranzbands ist mit I bezeichnet.

Ein zweiter Temperaturfühler dient dazu, die Abgastemperatur der Brennkraftmaschine zu bestimmen. Er besitzt einen Temperaturbereich von -50°C bis etwa 1000°C. Seine Fehlertoleranz ist temperaturabhängig und mit steigender Temperatur steigend. Ferner ist das Toleranzband wesentlich größer als im Falle des ersten Temperaturfühlers. Bei 0°C reicht es von -30 bis +30°C, d.h. die verwendeten Temperaturfühler dieses Typs geben bei tatsächlich 0°C einen Temperaturwert aus, der zwischen -30° und +30°C liegt. Das gesamte Temperaturtoleranzband für den zweiten Temperaturfühler ist mit II bezeichnet.

Erfindungsgemäß erfolgt dann, wenn die mit den beiden Temperaturfühlern gemessene Temperatur tatsächlich zumindest annähernd gleich ist, ein Abgleich der beiden Sensorsignale. Hierzu wird das gewichtete Mittel der von den beiden Temperaturfühlern gelieferten Temperaturwerte bestimmt. Die Voraussetzung für den Abgleich ist nach einem mehrstündigen Stillstand der Brennkraftmaschine gegeben. Die tatsächliche Temperatur betrage beispielsweise 20°C, der entsprechende Wert ist auf der Temperaturskala mit einem x gekennzeichnet. Entsprechend dem angegebenen Toleranzband entspricht das Temperatursignal für den ersten Temperaturfühler einer Temperatur von beispielsweise 20+1=21°C.

Der Temperaturfehler des zweiten Temperaturfühlers beträgt bei 20°C tatsächlicher Temperatur beispielsweise 25°C. Das Ausgangssignal dieses Temperaturfühlers entspricht daher einer Temperatur von 20+25=45°C bei absolut exakter Temperatur von 20°C. Aufgrund des vom ersten Temperaturfühlers gelieferten Temperaturwerts und unter Berücksichtigung des für diesen Wert maximal möglichen Fehler (+/- 2,5°) ergibt sich, daß der vom zweiten Temperaturfühler gelieferte Temperaturwert hier deutlich höher als der tatsächliche Temperaturwert ist. Der Temperaturwert, wie er vom zweiten Temperaturfühler geliefert wird, wird daher angepaßt. Hierzu wird das gewichtete arithmetische Mittel der beiden Temperaturwerte bestimmt. Dabei ist der Wichtungsfaktor für den Temperaturwert, wie er vom ersten Temperaturfühler geliefert wird, aufgrund der geringen maximalen Fehlerabweichung wesentlich höher, beispielsweise gleich 0,95, während der Temperaturwert des zweiten Temperaturfühlers dann nur noch mit dem Faktor von 0,05 gewichtet wird. Es ergibt sich somit ein rechnerisch ermittelter Temperaturwert von beispielsweise 22° übereinstimmend für das Kühlwasser und die Abgastemperatur.

Mit diesem Ausgangswert von 22°C ermittelter rechnerischer Temperatur (bei tatsächlich absolut 20°C) läßt sich auch für Temperaturwerte, die oberhalb des mit dem ersten Temperaturfühler bestimmbaren Temperaturwerts liegen, eine Verringerung des Meßfehlers erzielen. Bedingt durch die vorgegebene temperaturabhängige Verbreiterung des Fehlertoleranzbands II läßt sich das Toleranzband des zweiten Temperaturfühlers auf den Bereich eingrenzen, der durch zwei spiegelbildlich zur Temperaturskala verlaufende Geraden g1 und g1' begrenzt ist. Diese Geraden verlaufen parallel zu den vorgegebenen Geraden g0 und g0', die das Toleranzband II begrenzen. Im angenommenen Fall einer Abweichung des gemessenen Temperaturwerts um 25°C bei 20°C ergibt sich somit bei beispielsweise 1000 °C absolut ein vermeintlicher Temperaturwert von 1038°C, der in einen entsprechenden Temperaturwert von 1005°C übergeführt wird. Zur Verdeutlichung:

In einem ersten Schritt wird für die Ausgangstemperatur, hier absolut mit 20°C angenommen, aus den Temperaturwerten T1 und T2 der von den beiden Temperaturfühler bestimmten Temperaturen das gewichtete arithmetische Mittel, die rechnerisch bestimmte absolute Temperatur Tₐᵣ bestimmt.

In einem zweiten Schritt wird die Abweichung x des vom zweiten Meßfühler gelieferten Temperatursignals, hier =23° bestimmt. Das bei absolut 1000 °C gemessene Temperatursignal, hier von 1038 °C wird um den Wert von x=23° nach unten korrigiert. Daraus ergibt sich die rechnerisch bestimmte Temperatur für den zweiten Temperaturfühler von 1015°C.

Die zuletzt genannte Operation setzt voraus, daß der Temperaturgang des Temperaturfühlers über den gesamten Meßbereich konstant ist. Sofern dies nicht der Fall ist, sondern er von der Absoluttemperatur abhängig ist -im Diagramm ist eine lineare Abhängigkeit gezeigt- wird diese Temperaturabhängigkeit ebenfalls berücksichtigt und der bei angenommen 20°C bestehende Differenzwert von 23°C entsprechend der absoluten Temperatur nach oben oder unten korrigiert. Diese Korrektur kann auch mit Hilfe einer Tabelle vorgenommen werden, aus der ein Rechner den jeweils gültigen Korrekturvert entnimmt und zur Bestimmung der gültigen Temperatur in Ansatz bringt. In der Darstellung ergibt sich eine Fehlertoleranz von zusätzlich 12°C, was zu einem korrigierten Temperaturwert von 1003°C bei tatsächlicher 1000°C führt.

Damit ergibt sich durch Berücksichtigung unterschiedlicher Temperaturfühler eine deutliche Verringerung der von diesen gelieferten Temperaturfehler. Voraussetzung hierfür ist die Annahme, daß die mit den Temperaturfühlern bestimmte Temperatur absolut zumindest annähernd gleich ist sowie die Kenntnis der Fehlertoleranzen der jeweiligen Temperaturfühler. Diese können, wie dargestellt, von unterschiedlicher Bauart sein und unterschiedlichen Objekten Zugeordnet sein. Sie können aber auch von gleicher Bauart sein und unterschiedlichen Objekten oder demselben Objekt zugeordnet sein. Sie sitzen dann an der gleichen Stelle oder unterschiedlichen Stellen des Objekts.

## Patentansprüche

1. Verfahren zur Temperaturbestimmung eines Objekts mit einem Temperaturfühler, insbesondere bei Kraftfahrzeugen, dadurch gekennzeichnet, daß ein weiterer Temperaturfühler demselben oder einem anderen Objekt zugeordnet ist, daß das Ausgangssignal des weiteren Temperaturfühlers berücksichtigt wird, wenn die zu erwartenden Temperaturen für beide Temperaturfühler zumindest annähernd gleich sind und daß die tatsächliche Temperatur des Objekts bzw. beider Objekte durch Mittelwertbildung aus den von beiden Sensoren bestimmten Temperaturen abgeleitet wird.

2. Verfahren nach Anspruch 1, dadurch gekennzeichnet, daS die Mittelwertbildung entsprechend der Fehlertoleranz der Temperaturfühler vorgenommen wird.

3. Verfahren nach Anspruch 1 oder 2, dadurch gekennzeichnet, daß die Mittelwertbildung von der gemessenen Temperatur abhängt.

4. Verfahren nach einen der Ansprüche 1 bis 3, dadurch gekennzeichnet, daß der Zusammenhang zwischen gemessener Temperatur und der Fehlertoleranz aus einer Tabelle entnommen wird.
